Europäisches Patentamt

European Patent Office

Office européen des brevets

(19)

(11) Veröffentlichungsnummer: **0 102 056**
A2

## (12) EUROPÄISCHE PATENTANMELDUNG

(21) Anmeldenummer: 83108324.1

(22) Anmeldetag: 24.08.83

(51) Int. Cl.³: **A 01 G 27/00**
**B 28 B 1/26**

(30) Priorität: 26.08.82 DE 3231694

(43) Veröffentlichungstag der Anmeldung:
07.03.84 Patentblatt 84/10

(84) Benannte Vertragsstaaten:
AT BE CH FR GB IT LI LU NL SE

(71) Anmelder: Gebhart, Hubert
Danziger Strasse 1
D-6729 Jockgrim(DE)

(72) Erfinder: Gebhart, Hubert
Danziger Strasse 1
D-6729 Jockgrim(DE)

(74) Vertreter: Geitz, Heinrich, Dr.-Ing.
Postfach 2708 Kaiserstrasse 156
D-7500 Karlsruhe 1(DE)

(54) Pflanzgefäss für Erdkulturen auf Hydrobasis und Verfahren zum Herstellen keramischer Pflanzgefässe für diesen Zweck.

(57) Das Pflanzgefäß besitzt wenigstens eine von seinem Innenraum abgetrennte Aufnahmekammer für Flüssigkeit und zumindest Teile einer diese Aufnahmekammer vom Gefäßinnenraum trennenden Wand sind porös ausgebildet, so daß ein allmählicher Flüssigkeitsübergang aus der Aufnahmekammer in den Gefäßinnenraum bzw. in diesem aufgenommene Füllstoffe stattfinden kann. Bei der Ausbildung als Keramikgefäß können wenigstens Teile der genannten Wand unglasiert sein, während die Außenwände zweckmäßig glasiert sein sollten. Bei dem Verfahren zum Herstellen keramischer Pflanzgefäße dieser Art handelt es sich um ein modifiziertes Tongießverfahren unter Verwendung einer Gipskernform, die aus einer Außenform und einem Formkern besteht, zwischen denen ein wenigstens abschnittsweise über die Gefäßwandstärke erweiterte Bereiche aufweisender Formhohlraum gebildet ist. Nach dem Anziehen abgegossener Keramikmasse wird über entsprechende Öffnungen in den über die geforderte Gefäßwandstärke hinausragenden Bereichen verbleibende flüssige Keramikmasse ausgegossen und danach werden nacheinander der Formkern und die Außenform entfernt.

FIG. 1

0102056

832111

Anmelder:    Herr
             Hubert Gebhart
             Danziger Straße 1
D- 6729 Jockgrim

Pflanzgefäß für Erdkulturen auf Hydrobasis und Verfahren
zum Herstellen keramischer Pflanzgefäße für diesen Zweck

========================================================

Die Erfindung bezieht sich auf ein Pflanzgefäß für Erdkulturen auf Hydrobasis, insbesondere auf ein keramisches
Pflanzgefäß, mit einem eine Offenseite aufweisenden, im
übrigen aber von Gefäßwänden umschlossenen Innenraum zur
Aufnahme von Erdreich oder ähnlichen Füllstoffen,
ferner auf ein Verfahren zum Herstellen keramischer
Pflanzgefäße für den genannten Zweck nach dem Tongießverfahren.

Für Erdkulturen auf Hydrobasis ist es typisch, einen
allmählichen Flüssigkeitsübergang aus in die Kultur
eingebauten Flüssigkeitsreservoiren vorzusehen. Bei
bekannten Gefäßen für diesen Zweck bedarf es entweder
besonderer Gefäßeinsätze mit dochtartig wirkenden
Mitteln, um die in den Reservoiren enthaltene Flüssigkeit an das Wurzelwerk der eine Hydrokultur bildenden
Pflanzen heranzubringen, oder es sind zwischen den die
Pflanzen aufnehmenden Gefäßfüllungen und den Flüssigkeitsreservoiren mit Durchgangsöffnungen versehene Abdeckungen angeordnet,durch die das Wurzelwerk hindurchtreten und unmittelbar bis in die Flüssigkeitsreservoire hineinreichen kann.

Demgegenüber besteht eine der Erfindung zugrundeliegende Aufgabe in der Schaffung eines einfachen Pflanzgefäßes, insbesondere eines Keramikgefäßes, für Erdkulturen auf Hydrobasis, und ferner soll im Rahmen der vorliegenden Erfindung ein Verfahren zum Herstellen keramischer Pflanzgefäße für den vorgenannten Zweck geschaffen werden.

Ausgehend von einem Gefäß der eingangs angegebenen Art ist die bezüglich des Pflanzgefäßes selbst gestellte Erfindungsaufgabe durch wenigstens eine vom Gefäßinnenraum abgetrennte Aufnahmekammer für Flüssigkeit sowie dadurch gekennzeichnet, daß zumindest Teile einer die Aufnahmekammer vom Gefäßinnenraum trennenden Wand in solcher Weise porös ausgebildet sind, daß ein allmählicher Flüssigkeitsübergang aus der Aufnahmekammer in die im Gefäßinnenraum aufgenommenen Füllstoffe, in welche die Pflanzen eingesetzt sind, stattfinden kann.

Bei dem erfindungsgemäßen Pflanzengefäß handelt es sich mithin darum, daß eine den Gefäßinnenraum, in dem Erdreich oder entsprechende Füllstoffe aufgenommen sind, von einer Aufnahmekammer für Flüssigkeit trennende Wand wenigstens in Teilbereichen angesichts der ihr eigenen Porosität flüssigkeitsdurchlässsig ist, so daß bei bestimmungsgemäßer Verwendung des Gefäßes die in einer derartigen Aufnahmekammer aufgenommene Flüssigkeit nach und nach durch die porösen Wandbereiche hindurchtritt und in die im Gefäßinnenraum aufgenommene Füllstoffe und damit an das Wurzelwerk der in die Füllstoffe eingepflanzten Pflanzen gelangt.

Eine besonders zweckmäßige Ausbildung eines derartigen Pflanzgefäßes ist dadurch gekennzeichnet, daß die Aufnahmekammer für Flüssigkeit eine zwischen doppelwandigen Abschnitten der Gefäßwände gebildete Tasche mit zumindest einer oberen Einfüllöffnung ist, so daß im Bedarfsfalle die Aufnahmekammer jeweils von oben mit Flüsssigkeit in dem Maße nachgefüllt werden kann, wie Flüssigkeit aus der genannten Aufnahmekammer durch die porösen Wandabschnitte in die im Gefäßinnenraum aufgenommenen Füllstoffe eintritt.

Anstelle einer Aufnahmekammer für Flüssigkeit können naturgemäß auch mehrere derartige Aufnahmekammern vorgesehen sein. Als vorteilhaft hat es sich jedoch erwiesen, wenn in weiterer zweckmäßiger Ausgestaltung der Erfindung die zwischen den doppelwandigen Abschnitten der Gefäßwände gebildete Aufnahmekammer für Flüssigkeit sich in der Tiefe des Gefäßinnenraums um diesen herumerstreckt, so daß von allen Seiten her Flüssigkeit in die im Gefäßinnenraum aufgenommenen Füllstoffe eindringen kann. Naturgemäß bieten sich bei einer derartigen Ausgestaltung insbesondere rotationssymmetrische Gefäßformen an. Dabei kann die Aufnahmekammer für Flüssigkeit oberseitig durch eine in der Art einer inneren Ringschulter ausgebildeten Wand abgeschlossen sein, durch die sich in vorbestimmten Abständen voneinander angeordnete Öffnungen zum Zuführen von Flüssigkeit hindurcherstrecken, die somit ein einfaches Nachfüllen der durch die porösen Wandabschnitte aus der Aufnahmekammer in die Füllstoffe wandernden Flüssigkeit ermöglichen.

Ein weiteres Ausgestaltungsmerkmal der Erfindung besteht darin, daß bei der Ausbildung des Pflanzgefäßes als kermaisches Gefäß wenigstens die den Aufnahmeraum für Flüssigkeit umschließenden äußeren Gefäßwandungen flüssigkeitsdicht, insbesondere glasiert, hingegen die die Aufnahmekammer gegenüber dem Gefäßinnenraum abschließenden Wände zumindest abschnittsweise unglasiert belassen sind, so daß die Aufnahmekammer für Flüssigkeit nach außen hin flüssigkeitsdicht abgeschlossen ist, während die die genannte Aufnahmekammer gegenüber dem Gefäßinnenraum abtrennenden Wandungen einen allmählichen Flüssigkeitsdurchtritt ermöglichen.

Ausgehend von dem sog. Tongießverfahren ist die auf die Schaffung eines Verfahrens zum Herstellen keramischer Pflanzgefäße der vorgenannten Art gerichtete Aufgabe dadurch gelöst, daß in einer Gipskernform, die aus einer Außenform und einem in Ausformrichtung hinterschneidungsfreien Formkern besteht und zwischen letzterem und den äußeren Formteilen einen der Gefäßwandstärke entsprechenden Formhohlraum mit wenigstens einem die Gefäßwandstärke merklich übersteigenden Bereich bildet, wobei in letzteren von der Ausformseite des Formkerns her wenigstens ein sich durch den Formkern hindurcherstreckender Zapfen aus einem gegen die Aufnahme von Flüssigkeit resistentem Material hineinragt, Keramikgießlinge gewonnen werden, indem der Formhohlraum mit flüssiger Keramikmasse ausgegossen und nach dem Anziehen dieser Keramikmasse und der damit einhergehenden Scherbenbildung durch Entfernen des Zapfens , der in den erweiterten Bereich des Formhohlraums hineintragt, eine Ausgußöffnung für die in diesem Bereich noch anzutreffende flüssige Keramikmasse freigelegt sowie letztere abgegossen wird, worauf der Keramikgießling über im Formkern vorhandene Kanäle innenseitig mit Druckluft beaufschlagt wird und danach der Formkern sowie nachfolgend, nachdem der Scherben eine hinreichende Gestaltfestigkeit erlangt hat, die Außenform entfernt werden.

Das Herstellen von Keramikgießlingen nach dem sog. Tongießverfahren ist allgemein bekannter Stand der Technik. Dabei handelt es sich darum, daß eine ein- oder mehrteilige Gipsform mit flüssiger, oder jedenfalls fließfähiger Keramikmasse ausgegossen wird, die sich in den der Gießformwandung benachbarten Randzonen infolge intensiven Flüssigkeitsentzugs durch die Gipsform innerhalb einer vorbestimmten Zeitspanne verfestigt. Dieser Vorgang wird als "Anziehen" der Keramikmasse oder auch als "Scherbenbildung" bezeichnet. Nach dem Anziehen bzw. der Scherbenbildung wird die verbleibende flüssige Gießmasse aus der Form abgegossen, wobei der angezogene Wandbereich in der Gießform verbleibt und sich weiter zum eigentlichen "Scherben" des Keramikgießlings verfestigt.

Von diesem vorbekannten Verfahren, das außerordentlich zeitaufwendig ist, unterscheidet sich nun das erfindungsgemäße Herstellungsverfahren dadurch, daß eine Gipskernform Verwendung findet, die aus einer erforderlichenfalls mehrteiligen Außenform und einem in Ausformrichtung hinterschneidungsfreien Gipsformkern besteht, wobei zwischen der Außenform und dem Formkern ein Formhohlraum vorhanden ist, der mit flüssiger Keramikmasse auszufüllen ist und, abgesehen von besonderen Bereichen, im wesentlichen der Stärke der Wandungen des abzugießenden Keramikgefäßes entspricht. Es ist ersichtlich, daß angesichts des Flüssigkeitsentzugs aus der in den Formhohlraum eingefüllten Keramikmasse sowohl zum Formkern als auch zu der äußeren Gipsform hin das "Anziehen" der eingegossenen Keramikmasse und damit die "Scherbenbildung" außerordentlich beschleunigt werden.

Wenn der mit flüssiger Keramikmasse auszugießende Formhohlraum, wie im Falle der vorliegenden Erfindung, Bereiche aufweist, in denen der Abstand zwischen den äußeren Formteilen und dem inneren Formkern die geforderten Wandstärken merklich übersteigt, verbleiben in diesen Bereichen zwischen den einerseits zum Formkern und andererseits zu der Außenform hin anziehenden Randzonen Teile der eingefüllten Keramikmasse im flüssigen Zustand. In diese Bereiche ragen nun von der Ausformseite des Formkerns her sich durch diesen hindurcherstreckende Zapfen hinein, die aus einem Material bestehen, das der abgegossenen Keramikmasse keine Flüssigkeit entzieht. Nach der sog. Scherbenbildung werden nun diese Zapfen aus ihren in die erweiterten Formhohlraumbereiche, in denen sich noch flüssige Keramikmasse befindet, hineinragenden Lagen herausgezogen, wodurch in den während des Anziehens der Keramikmasse gebildeten Randzonen Abflußöffnungen für
die noch flüssig verbliebene Keramikmasse geschaffen
werden, die dann über diese Abflußöffnungen und durch
das Herausziehen der Zapfen freigelegte Kanäle im
Formkern abläuft. Durch das Ablaufen der flüssigen
Keramikmasse entstehen zwischen den angezogenen Randzonen, bei denen es sich letztlich um doppelwandige
Abschnitte der Gefäßwandungen handelt, taschenartige
Hohlräume.

Diese taschenartigen Hohlräume bilden beim fertigen
Keramikgefäß die Aufnahmekammern für Flüssigkeit,
die über die durch das Herausziehen der Zapfen freigelegten Ausgußöffnungen, die sich auf der vom Boden
des Keramikgießlings entfernten Seite in den Gefäßinnenraum hineinerstrecken, mit Flüssigkeit befüllbar
sind. Wenn die Außenwandungen im Bereich dieser Aufnahmetaschen durch entsprechende Glasuren flüssigkeitsdicht ausgebildet, hingegen die die genannten Aufnahmetaschen gegenüber dem Gefäßinnenraum abtrennenden
Wandungen unglasiert belassen werden, sind zwischen
den Aufnahmekammern für die Flüssigkeit und dem Gefäßinnenraum poröse Wandungen geschaffen, die einen allmählichen Durchtritt der in den Aufnahmekammern aufgenommenen Flüssigkeit in den Gefäßinnenraum ermöglichen.

Ein besonderes Problem besteht nun allerdings darin,
den Formkern aus dem sich durch das oben erläuterte
Anziehen der Gießmasse ausbildenden Keramikgießling
auszuformen, weil der Gießling mit fortschreitender
Scherbenbildung auf den Formkern aufschrumpft. Dieses
Problem ist in der Weise gelöst, daß nach dem "Anziehen" der abgegossenen Keramikmasse und nach dem Abfließen der in den erweiterten Formhohlraumbereichen verbliebenen flüssigen Keramikmasse, nachdem die in diese Erweiterungsbereiche hineinragenden Zapfen entfernt worden sind, der Keramikgießling innenseitig über im Formkern vorgesehene Strömungswege kurzzeitig mit Druckluft, oder einem anderen gasförmigen Medium, beaufschlagt und dadurch in einem noch begrenzt plastisch verformbaren Zustand der bereits angezogenen Keramikmasse in solcher Weise radial aufgeweitet wird, daß jedenfalls dann ein problemloses Ausformen des Formkerns gelingt, wenn dieser, wie im vorliegenden Falle, in Ausformrichtung hinterschneidungsfrei ausgeführt oder gar mit einer Ausformschräge versehen ist. Nach Ablauf einer vorbestimmten Zeit, innerhalb der der Keramikgießling hinreichende Gestaltfestigkeit erlangt hat, kann dann die Außenform entfernt werden.

Anhand der beigefügten Zeichnung sollen nachstehend eine Ausführungsform des erfindungsgemäßen Pflanzgefäßes und dessen Herstellung erläutert werden. In schematischen Ansichten zeigen:

Fig. 1     ein erfindungsgemäßes Pflanzgefäß mit einem den unteren Teil des Gefäßinnenraums umschließenden Aufnahmeraum für Flüssigkeit in einem Vertikalschnitt,

Fig. 2     das Gefäß gemäß Fig. 1, ebenfalls im Vertikalschnitt, mit im Gefäßinnenraum aufgenommenem Erdreich und einer in dieses eingepflanzten Zierpflanze und

Fig. 3    einen Vertikalschnitt durch eine Gipskern-
          form mit einem abgegossenen Keramikgieß-
          ling.

Bei dem in seiner Gesamtheit mit 10 bezeichneten
Pflanzgefäß handelt es sich um ein rotationssymmetrisches Keramikgefäß, dessen von den Gefäßwänden 11 umschlossener Innenraum 12 in einen der
Offenseite 13 benachbarten Abschnitt und einen sich
daran anschließenden, im Querschnitt reduzierten
und unterseitig von einem Boden 14 begrenzten Abschnitt unterteilt ist. Die Querschnittsreduzierung
des unteren Abschnittes des Gefäßinnenraums 12 ist
durch eine sich um den genannten Innenraum herumerstreckende Aufnahmekammer 15 für Flüssigkeit verursacht, die einerseits durch  den unteren Teil der
äußeren Gefäßwand 11 und andererseits durch eine
Innenwand 16 begrenzt ist, die sich nach oben in
einer in den oberen Teil der Gefäßwand übergehenden Schulter 17 fortsetzt.In dieser Schulter sind
in vorbestimmten Abständen voneinander Einfüllöffnungen
18 zum Einbringen von Flüssigkeit in die genannte Aufnahmekammer 15 angeordnet.

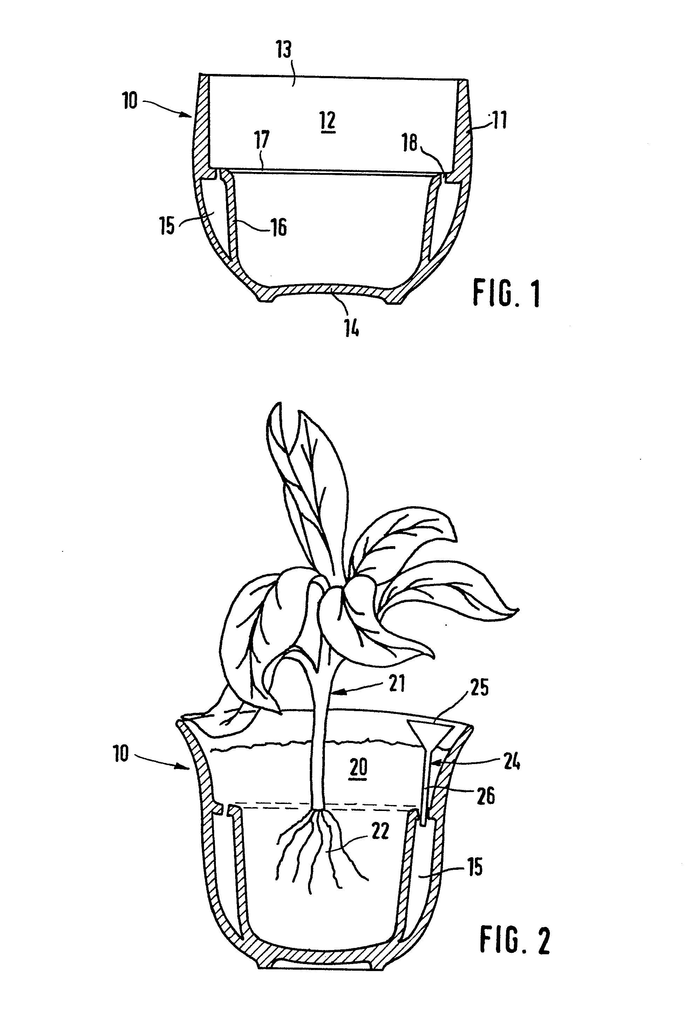

In Fig. 2 ist die bestimmungsgemäße Verwendung eines
derartigen Pflanzgefäßes 10 veranschaulicht. Der Gefäßinnenraum 12 ist bis in die Nähe des oberen, die
Offenseite 13 begrenzenden Randes mit Erdreich 20
gefüllt und in dem Erdreich ist eine Zierpflanze 21
aufgenommen, deren Wurzelwerk 22 sich insbesondere
in dem unteren Teil des Gefäßinnenraums verästelt, der von dem durch die doppelwandige Ausbildung der Gefäßwand gebildeten Aufnahmeraum 15 für Flüssigkeit umschlossen ist. Dieser Flüssigkeitsaufnahmeraum ist nach außen hin flüssigkeitsdicht abgeschlossen, indem die Gefäßwand 11 außenseitig glasiert ist. Die den Flüssigkeitsaufnahmeraum zum Gefäßinneren 12 hin abschließende Zwischenwand 16 ist hingegen unglasiert belassen, so daß angesichts der Porosität dieser Zwischenwand stetig Flüssigkeit aus dem Aufnahmeraum 15 in das im Gefäßinnenraum 12 aufgenommene Erdreich 20 und damit an das Wurzelwerk 22 der in das Erdreich eingepflanzten Zierpflanze 21 gelangen kann. Durch die poröse innere Trennwand 16 aus dem Flüssigkeitsaufnahmeraum 15 in das Erdreich gelangende Flüssigkeit wird mittels eines Trichters 24 von oben nachgefüllt, der mit seiner Einfüllöffnung 25 über die Erdfüllung in dem Pflanzgefäß hinausragt und sich mit einem Führungsrohr 26 durch das Erdreich 20 und eine Erdfüllung 18 in der oberen Abschlußwand des Flüssigkeitsaufnahmeraums 15 hindurcherstreckt.

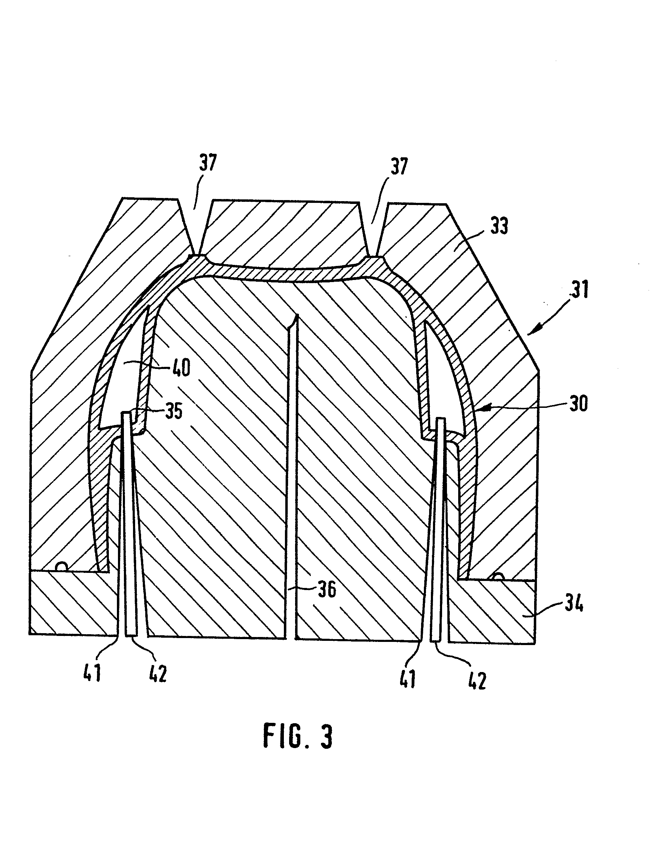

Zum Herstellen von Keramikgießlingen 30 für Pflanzgefäße der vorstehend erläuterten Art dient die aus Fig. 3 ersichtliche Gipskernform 31, die aus einem dem Innenraum des herzustellenden Gefäßes entsprechend gestalteten Formkern 32 und aus einer mehreren Formteilen 22 gebildeten Außenform besteht. Die äußeren Formteile 33 sind auf einem sich über den Querschnitt des Formkerns 32 forterstreckenden Formkernflansch 34 aufgenommen und dem Formkern in solcher Weise zugeordnet, daß zwischen diesem und den äußeren Formteilen ein Formhohlraum gebildet ist, der den Wandungen

des herzustellenden Keramikgefäßes entspricht.

Wie Fig. 3 zeigt, werden die Keramikgießlinge 30 zum Herstellen keramischer Pflanzgefäße in Überkopflage abgegossen, also in der Weise, daß die Offenseite des Keramikgefäßes nach unten weist und sich der das Gefäß bei bestimmungsgemäßem Gebrauch nach unten abschließende Boden oben befindet. In der Nähe dieses Bodens und bis über etwa die halbe Vertikalerstreckung des Pflanzgefäßes reichend ist der Zwischenraum zwischen den äußeren Formteilen und dem inneren Formkern merklich über die geforderte Wandstärke des Keramikgießlings hinausgehend erweitert. Die äußeren Formteile und der Formkern sind Gipsformteile und im Bereich der taschenartigen Erweiterung des Formhohlraums ragen von der Ausformseite her Zapfen 35 in den erweiterten Bereich hinein, die sich durch den Formkern 32 hindurcherstrecken und aus einem Werkstoff bestehen, der gegen die Aufnahme von Flüssigkeit resistent ist. Außerdem erstrecken sich durch den Formkern 32 nur schematisch angedeutete Zuführkanäle 36 für Druckluft oder ein anderes gasförmiges Medium hindurch, dessen bestimmungsgemäßer Zweck unten noch näher erläutert wird.

Wenn die Form in der aus Fig. 3 ersichtlichen Weise zusammengesetzt ist, wird der Formhohlraum über oberseitige Eingießöffnungen 37 in den äußeren Formteilen 33 bis zur vollständigen Füllung mit Keramikmasse ausgegossen. Soweit zur Vermeidung von Hohlraumbildungen erforderlich, können Entlüftungsmöglichkeiten für den Formhohlraum vorgesehen sein. Nach dem Ausgießen des Formhohlraums entziehen der Formkern und die äußeren Formteile 33 der Gipskernform der eingefüllten Keramikmasse in den Randzonen Flüssigkeit. Dieser Vorgang wird als "Anziehen" der Keramikmasse bezeichnet und bewirkt deren Erstarrung. Infolge dieser sog. "Scherbenbildung" liegt nach einer vorbestimmten Zeitdauer ein teilweise erstarrter Keramikgießling 30 vor, bei dem in dem über die geforderte Wandstärke des Keramikgießlings hinaus erweiterten Bereich nur die dem inneren Formkern einerseits und den äußeren Formteilen andererseits benachbarten Randzonen 38, 39 entsprechend erstarrt sind, während in Inneren dieser erweiterten Bereiche noch flüssige Keramikmasse, wie bei 40 angedeutet, vorhanden ist. Wenn nun die in die genannten erweiterten Bereiche hineinragenden Zapfen 35, die auf der von der Eintauchseite des Formkerns entfernten Seite mit Abschnitten 41 über diesen hinausragen und in Kanälen 42 aufgenommen sind, die sich durch den Formkern hindurcherstrecken, aus ihren Lagen herausgezogen werden, fließt die zwischen den erstarrten Randzonen 38, 39 verbliebene flüssige Keramikmasse über die freigelegten Öffnungen 18 und die sich durch den Formkern hindurcherstreckenden Kanäle 42 ab, so daß zwischen den genannten erstarrten Randzonen, die einen doppelwandigen Abschnitt des Keramikgießlings und letztlich die Innenwand 16 und die Innenwand 16 und die Außenwand 11 dieses Bereichs bilden, eine den bodennahen Innenraum des Keramikgießlings umschließende Aufnahmekammer 15 entsteht.

Da angesichts des mit dem Anziehen der Keramikmasse, also mit der beginnenden Scherbenbildung, verbundenen Schrumpfens des Keramikgießlings 30 der Formkern 32 nicht ohne weiteres aus dem teilweise erstarrten Gießling entfernt werden kann, wird durch die Strömungskanäle 36 im Formkern Druckluft eines vorbestimmten Druckniveaus über eine vorbestimmte Zeitdauer eingeführt, was zu einer Beaufschlagung der Innenwandungen des Gießlings sowie dazu führt, daß der Gießling in einem Maße aufgeweitet wird, das ein Entformen des Formkerns ermöglicht. Die Außenform kann dann in bekannter Weise nach Ablauf einer vorbestimmten Zeitdauer entfernt werden, wenn der Keramikgießling eine für dieses Ausformen hinreichende Gestaltfestigkeit erlangt hat.

Ein so hergestellter Keramikgießling wird dann in bekannter Weise zumindest in dem Bereich außenseitig glasiert, der den durch die doppelwandige Ausbildung geschaffenen Aufnahmeraum 15 umschließt. Dadurch ist eine nach außen dichte Aufnahmekammer für Flüssigkeit geschaffen, die zum Gefäßinnenraum 12 hin durch eine poröse und mithin den Übergang von Flüssigkeit in den Gefäßinnenraum ermöglichende Zwischenwand 16 abgegrennt ist.

Anmelder:     Herr
              Hubert Gebhart
              Danziger Straße 1
        D- 6729 Jockgrim

Patentansprüche
================

1.    Pflanzgefäß für Erdkulturen auf Hydrobasis,
insbesondere keramische Pflanzgefäße, mit einem
eine Offenseite aufweisenden, im übrigen aber von
Gefäßwänden umschlossenen Innenraum zur Aufnahme
von Erdreich oder ähnlichen Füllstoffen,
gekennzeichnet
durch wenigstens eine vom Innenraum (12) des Gefäßes
(10) abgetrennte Aufnahmekammer (15) für Flüssigkeit
sowie dadurch, daß zumindest Teile einer diese Aufnahmekammer vom Gefäßinnenraum trennenden Wand (16)
in solcher Weise porös ausgebildet und einen allmählichen
Flüssigkeitsübergang aus der Aufnahmekammer in den
Gefäßinnenraum bzw. in letzterem aufgenommene Füllstoffe
ermöglichen.

2. Pflanzgefäß nach Anspruch 1, dadurch gekennzeichnet, daß die Aufnahmekammer (15) für Flüssigkeit eine zwischen doppelwandigen Abschnitten der Gefäßwände (11) gebildete Tasche mit zumindest einer oberen Einfüllöffnung (28) ist.

3. Pflanzgefäß nach Anspruch 2, dadurch gekennzeichnet, daß die zwischen den doppelwandigen Abschnitten der Gefäßwände (11) gebildete Aufnahmekammer (15) für Flüssigkeit sich in der Tiefe des Gefäßinnenraums (12) um diesen heraumerstreckt.

4. Pflanzgefäß nach Anspruch 2 oder 3, dadurch gekennzeichnet, daß die Aufnahmekammer (15) für Flüssigkeit oberseitig durch eine in der Art einer inneren Ringschulter (17) ausgebildete Wand abgeschlossen ist, durch die sich in vorbestimmten Abständen voneinander angeordnete Öffnungen (18) zum Zuführen von Flüssigkeit in die Aufnahmekammer hindurcherstrecken.

5. Pflanzgefäß nach einem der Ansprüche 1 bis 4, dadurch gekennzeichnet, daß bei der Ausbildung als keramisches Gefäß (10) wenigstens die den Aufnahmeraum (15) für Flüssigkeit umschließenden äußeren Gefäßwandungen (11) flüssigkeitsdicht, insbesondere glasiert, hingegen die die Aufnahmekammer gegenüber dem Gefäßinnenraum (12) abschließenden Wände (16) zumindest abschnittsweise unglasiert belassen sind.

6. Verfahren zum Herstellen keramischer Pflanzgefäße mit den Merkmalen nach einem der Ansprüche 2 bis 4, im Tongießverfahren, dadurch gekennzeichnet, daß in einer Gipskernform (31) die aus einer Außenform (33) und einem in Ausformrichtung hinterschneidungsfreien Gipsformkern (32) besteht sowie zwischen letzterem und der Außenform einen der Gefäßwandstärke entsprechenden Formhohlraum mit wenigstens einem die Gefäßwandstärke merklich übersteigenden Bereich bildet, wobei in letzteren von der Ausformseite des Formkerns her wenigstens ein sich durch den Formkern hindurcherstreckender Zapfen (35) aus einem gegen die Aufnahme von Flüssigkeit resistentem Material hineinragt, Keramikgießlinge (30) gewonnen werden, indem der Formhohlraum mit flüssiger Keramikmasse ausgegossen und nach dem Anziehen dieser Keramikmasse und der damit einhergehenden Scherbenbildung durch Entfernen des Zapfens (35) eine Ausgußöffnung (18) für die in dem erweiterten Bereich des Formhohlraums noch anzutreffende flüssige Keramikmasse freigelegt sowie letztere ausgegossen wird, worauf der Keramikgießling über im Formkern vorhandene Kanäle (36) innenseitig mit Druckluft beaufschlagt wird und danach der Formkern sowie nachfolgend, nachdem der Scherben eine hinreichende Gestaltfestigkeit erlangt hat, die Außenform entfernt werden.

FIG. 1

FIG. 2

FIG. 3